# EUROPÄISCHE PATENTANMELDUNG

(11) **EP 1 384 578 A2**
(43) Veröffentlichungstag der Anmeldung: **28.01.2004**
(21) Anmeldenummer: 03014777.1
(22) Anmeldetag: 28.06.2003
(51) Int. Cl.: B32B 31/12

(54) **Verfahren zum Verkleben von mindestens zwei Kunststoffplatten sowie Vorrichtung zur Durchführung des Verfahrens**

(30) Priorität: 24.07.2002 DE 10233684
(71) Anmelder: Röhm GmbH & Co. KG, 64293 Darmstadt (DE)
(72) Erfinder: Sättler, Roland, 64372 Ober-Ramstadt (DE); Rimpl, Manfred, 64853 Otzberg (DE); Blumenschein, Michael, 64625 Bensheim (DE); Wiebel, Wolffgang, 63808 Hainbach (DE)

(57) **Zusammenfassung**

Die vorliegende Erfindung betrifft Verfahren zum Verkleben von mindestens zwei Kunststoffplatten (3,4), bei dem man auf mindestens eine der zu verklebenden Oberflächen einen flüssigen Klebstoff aufträgt, die beiden Platten mit zwei Walzen (5,6) zusammenpreßt und anschließend den sich zwischen den Platten befindlichen Klebstoff aushärtet, wobei man über mindestens eine der Walzen (5,6) eine Schutzfolie (7,8) führt. Des weiteren betrifft die vorliegende Erfindung Vorrichtungen zur Durchführung des Verfahrens.

## Beschreibung

Die vorliegende Erfindung betrifft Verfahren zum Verkleben von mindestens zwei Kunststoffplatten, bei dem man auf mindestens eine der zu verklebenden Oberflächen einen flüssigen Klebstoff aufträgt, die beiden Platten mit zwei Walzen zusammenpreßt und anschließend den sich zwischen den Platten befindlichen Klebstoff aushärtet, sowie eine Vorrichtung zur Durchführung des Verfahrens.

Verfahren zum Verkleben von Platten sind an sich bekannt. Hierzu können flüssige Klebstoffe oder Folien mit klebenden Eigenschaften verwendet werden. Die Verwendung von Klebefolien ist beispielsweise in JP-A-2001-030420 beschrieben.

Nachteilig ist hierbei, daß die optischen und mechanischen Eigenschaften der verklebten Platten nicht optimal sind. Die Klebefolie kann die sich auf jeder Fläche befindlichen Unebenheiten nicht ausgleichen. Hierdurch verbleiben kleine Hohlräume, die sowohl das Aussehen als auch die mechanischen Eigenschaften des Laminats nachteilig beeinflussen.

Des weiteren können transparente Platten mit flüssigem Klebstoff laminiert werden. Ein Flüssigkleber ist in der Lage die zuvor genannten Probleme zu lösen, da dieser die Unebenheiten der Oberfläche ausgleichen kann. Allerdings ist die Dosierung des Klebstoffs problematisch. Wird zu wenig Klebstoff aufgetragen, so ist die Gefahr sehr groß, daß Hohlräume entstehen. Hierdurch ergeben sich die zuvor genannten Probleme.

Des weiteren können große Mengen an Klebstoff aufgetragen werden. Nachteilig ist jedoch, daß überschüssiger Klebstoff aus der Klebezone heraus gedrückt wird. Hierdurch kommt es zunächst zu einer Verschmutzung der Walzen, die wiederum zu einer Verunreinigung der Platten führt. Bei Klebstoffen die leicht von der Platte entfernt werden können, führt dies lediglich zu einem zusätzlichen Aufwand. Allerdings hängt dies einerseits vom Klebstoff und andererseits vom Plattenmaterial ab. Glasplatten können im allgemeinen gut von organischen Klebstoffen befreit werden, da diese nur durch Adhäsion an der Platte haften.

Kunststoffplatten hingegen werden von guten Reaktions- und Lösungsmittelklebstoffen angelöst, um eine sehr hohe Haftung zu erhalten. Des weiteren kann die durch einen derartigen Klebstoff gebildete Zwischenschicht nach der Aushärtung nicht erkannt werden, da der Klebstoff üblich die gleichen optischen Eigenschaften wie die Kunststoffplatten aufweist. Kommt ein derartiger Klebstoff jedoch auf die Außenseite der Kunststoffplatten, wird auch diese angelöst, so daß eine rauhe Oberfläche entsteht, die die optische Güte des Laminats beeinträchtigt.

In Anbetracht des hierin angegebenen und diskutierten Standes der Technik war es mithin Aufgabe der vorliegenden Erfindung Verfahren zum Verkleben von Kunststoffplatten anzugeben, mit denen Laminate mit einer hohen optischen Güte erhalten werden können. Hierbei sollten die Platten des Laminats eine sehr hohe Haftung aufweisen, die ein Delaminieren der Platten verhindert.

Des weiteren lag der Erfindung die Aufgabe zugrunde, Verfahren zum Verkleben zu schaffen, die kostengünstig und einfach durchgeführt werden können. Hierbei sollte insbesondere auf eine komplizierte und anfällige Elektronik verzichtet werden, die die Klebstoffmenge steuert.

Eine weitere Aufgabe der vorliegenden Erfindung bestand darin Verfahren zum Verkleben von Kunststoffplatten anzugeben, die für viele Kunststoffarten anwendbar sind. Hierdurch können viele verschiedene Kunststoffplatten auf einer Anlage verklebt werden.

Darüber hinaus war es mithin Aufgabe der vorliegenden Erfindung Verfahren zum Verkleben von Kunststoffplatten zu schaffen, die übliche flüssige Klebstoffe zum Laminieren verwenden.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Verfahren. Zweckmäßige Abwandlungen der erfindungsgemäßen Verfahren werden in den auf Anspruch 1 rückbezogenen Unteransprüchen unter Schutz gestellt.

Hinsichtlich der Vorrichtung zur Durchführung des Verfahrens liefert der Anspruch 12 eine Lösung der zugrunde liegenden Aufgabe.

Dadurch, daß man in einem Verfahren zum Verkleben von mindestens zwei Kunststoffplatten, bei dem man auf mindestens eine der zu verklebenden Oberflächen einen flüssigen Klebstoff aufträgt, die beiden Platten mit zwei Walzen zusammenpreßt und anschließend den sich zwischen den Platten befindlichen Klebstoff aushärtet, über mindestens eine der Walzen eine Schutzfolie führt, gelingt es Laminate mit einer hohen optischen Güte zu erhalten.

Durch die erfindungsgemäßen Maßnahmen werden u.a. insbesondere folgende Vorteile erzielt:
- Durch das erfindungsgemäße Verfahren können Laminate mit einer hohen Haftung erhalten werden. Hierdurch wird ein Delaminieren der verklebten Platten zuverlässig verhindert.
- Des weiteren kann das erfindungsgemäße Verfahren einfach und kostengünstig durchgeführt werden, ohne daß eine aufwendige und anfällige elektronische Steuerung der Klebstoffzuführung notwendig wäre.
- Darüber hinaus kann das Verfahren der vorliegenden Erfindung für viele Kunststoffarten und Klebstoffe angewandt werden, ohne daß jeweils eine unterschiedlichen Anlage notwendig wäre.
- Des weiteren können zum Laminieren herkömmliche Reaktions- und Lösungsmittelklebstoffe verwendet werden, deren Viskosität nicht auf einen vorgegebenen eng begrenzten Bereich eingestellt werden muß.

Das vorliegende Verfahren dient zum Verkleben von mindestens zwei Kunststoffplatten. Derartige Platten sind an sich bekannt. Geeignete Kunststoffe umfassen insbesondere Polycarbonate, Polystyrole, Polyester, beispielsweise Polyethylenterephthalat (PET-G) und
Polybutylenterephthalat (PBT), cycloolefinische Polymere(COC) und/oder Polyacrylate. Bevorzugt sind hierbei Polycarbonate, cycloolefinische Polymere und Polyacrylate, wobei Polyacrylate besonders bevorzugt sind.

Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern in Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (tetrabromobisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 dargestellt sind.

Bei der Grenzflächenpolykondensation werden die Bisphenole als wäßrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysatoren gelangen Amine, bei sterisch gehinderten Bisphenolen auch Phasentransferkatalysatoren zum Einsatz. Die resultierenden Polymere sind in den verwendeten organischen Lösungsmitteln löslich.

Über die Wahl der Bisphenole können die Eigenschaften der Polymere breit variiert werden. Bei gleichzeitigem Einsatz unterschiedlicher Bisphenole lassen sich in Mehrstufen-Polykondensationen auch BlockPolymere aufbauen.

Cycloolefinische Polymere sind Polymere, die unter Verwendung von cyclischen Olefinen, insbesondere von polycyclischen Olefinen erhältlich sind.

Cyclische Olefine umfassen beispielsweise monocyclische Olefine, wie Cyclopenten, Cyclopentadien, Cyclohexen, Cyclohepten, Cycloocten sowie Alkylderivate dieser monocyclischen Olefine mit 1 bis 3 Kohlenstoffatomen, wie Methyl, Ethyl oder Propyl, wie beispielsweise Methylcyclohexen oder Dimethylcyclohexen, sowie Acrylat- und/oder Methacrylatderivate dieser monocyclischen Verbindungen. Darüber hinaus können auch Cycloalkane mit olefinischen Seitenketten als cyclische Olefine verwendet werden, wie beispielsweise Cyclopentylmethacrylat.

Bevorzugt sind verbrückte, polycyclische Olefinverbindungen. Diese polycyclischen Olefinverbindungen können die Doppelbindung sowohl im Ring aufweisen, es handelt sich hierbei um verbrückte polycyclische Cycloalkene, als auch in Seitenketten. Hierbei handelt es sich um Vinylderivate, Allyloxycarboxyderivate und (Meth)acryloxyderivate von polycyclischen Cycloalkanverbindungen. Diese Verbindungen können des weiteren Alkyl-, Aryl- oder Aralkylsubstituenten aufweisen.

Beispielhafte polycyclische Verbindungen sind, ohne daß hierdurch eine Einschränkung erfolgen soll, Bicyclo[2.2.1]hept-2-en (Norbornen),
Bicyclo[2.2.1]hept-2,5-dien (2,5-Norbornadien), Ethyl-bicyclo[2.2.1]hept-2-en (Ethylnorbornen), Ethylidenbicyclo[2.2.1]hept-2-en (Ethyliden-2-norbornen), Phenylbicyclo[2.2.1]hept-2-en, Bicyclo[4.3.0]nona-3,8-dien,
Tricyclo[4.3.0.1^{2,5}]-3-decen, Tricyclo[4.3.0.1^{2,5}]-3,8-decen-(3,8-dihydrodicyclopentadien), Tricyclo[4.4.0.1^{2,5}]-3-undecen,
Tetracyclo[4.4.0.1^{2,5},1^{7,10}]-3-dodecen, Ethyliden-tetracyclo[4.4.0.1^{2,5}.1^{7,10}]-3-dodecen, Methyloxycarbonyltetracyclo[4.4.0.1^{2,5},1^{7,10}]-3-dodecen,
Ethyliden-9-ethyltetracyclo[4.4.0.1^{2,5},1^{7,10}]-3-dodecen,
Pentacyclo[4.7.0.1^{2,5},O,O^{3,13},1^{9,12}]-3-pentadecen,
Pentacyclo[6.1.1^{3,6}.0^{2,7}.0^{9,13}]-4-pentadecen,
Hexacyclo[6.6.1.1^{3,6}.1^{10,13}.0^{2,7}.0^{9,14}]-4-heptadecen,
Dimethylhexacyclo[6.6.1.1^{3,6}.1^{10,13}.0^{2,7}.0^{9,14}]-4-heptadecen,
Bis(allyloxycarboxy)tricyclo[4.3.0.1^{2,5}]-decan,
Bis(methacryloxy)tricyclo[4.3.0.1^{2,5}]-decan, Bis(acryloxy)tricyclo[4.3.0.1^{2,5}]-decan.

Die cycloolefinischen Polymere werden unter Verwendung von zumindest einer der zuvor beschriebenen cycloolefinischen Verbindungen, insbesondere der polycyclischen Kohlenwasserstoffverbindungen hergestellt. Darüber hinaus können bei der Herstellung der cycloolefinischen Polymere weitere Olefine verwendet werden, die mit den zuvor genannten cycloolefinischen Monomeren copolymerisiert werden können. Hierzu gehören u.a. Ethylen, Propylen, Isopren, Butadien, Methylpenten, Styrol und Vinyltoluol.

Die meisten der zuvor genannten Olefine, insbesondere auch die Cycloolefine und Polycycloolefine, können kommerziell erhalten werden. Darüber hinaus sind viele cyclische und polycyclische Olefine durch Diels-Alder-Additionsreaktionen erhältlich.

Die Herstellung der cycloolefinischen Polymere kann auf bekannte Art und Weise erfolgen, wie dies u.a. in den japanischen Patentschriften 11818/1972, 43412/1983, 1442/1986 und 19761/1987 und den japanischen Offenlegungsschriften Nr. 75700/1975,129434/1980,
127728/1983, 168708/1985, 271308/1986, 221118/1988 und
180976/1990 und in den Europäischen Patentanmeldungen
EP-A-0 6 610 851, EP-A-0 6 485 893, EP-A-0 6 407 870 und
EP-A-0 6 688 801 dargestellt ist.

Die cycloolefinischen Polymere können beispielsweise unter Verwendung von Aluminiumverbindungen, Vanadiumverbindungen, Wolframverbindungen oder Borverbindungen als Katalysator in einem Lösungsmittel polymerisiert werden.

Es wird angenommen, daß die Polymerisation je nach den Bedingungen, insbesondere dem eingesetzten Katalysator, unter Ringöffnung oder unter Öffnung der Doppelbindung erfolgen kann.

Darüber hinaus ist es möglich, cycloolefinische Polymere durch radikalische Polymerisation zu erhalten, wobei Licht oder ein Initiator als Radikalbildner verwendet wird. Dies gilt insbesondere für die Acryloylderivate der Cycloolefine und/oder Cycloalkane. Diese Art der Polymerisation kann sowohl in Lösung als auch in Substanz erfolgen.

Ein weiterer bevorzugter Kunststoff umfaßt Polyacrylate. Diese Polymere werden im allgemeinen durch radikalische Polymerisation von Mischungen erhalten, die (Meth)acrylate enthalten. Der Ausdruck (Meth)acrylate umfaßt Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat;
(Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat;
Aryl(meth)acrylate, wie Benzyl(meth)acrylat oder
Phenyl(meth)acrylat, wobei die Arylreste jeweils unsubstituiert oder bis zu vierfach substituiert sein können;
Cycloalkyl(meth)acrylate, wie 3-Vinylcyclohexyl(meth)acrylat,
Bornyl(meth)acrylat;
Hydroxylalkyl(meth)acrylate, wie
3-Hydroxypropyl(meth)acrylat,
3,4-Dihydroxybutyl(meth)acrylat,
2-Hydroxyethyl(meth)acrylat, 2-Hydroxypropyl(meth)acrylat;
Glycoldi(meth)acrylate, wie 1,4-Butandiol(meth)acrylat,
(Meth)acrylate von Etheralkoholen, wie
Tetrahydrofurfuryl(meth)acrylat, Vinyloxyethoxyethyl(meth)acrylat;
Amide und Nitrile der (Meth)acrylsäure, wie
N-(3-Dimethylaminopropyl)(meth)acrylamid,
N-(Diethylphosphono)(meth)acrylamid,
1-Methacryloylamido-2-methyl-2-propanol;
schwefelhaltige Methacrylate, wie
Ethylsulfinylethyl(meth)acrylat,
4-Thiocyanatobutyl(meth)acrylat,
Ethylsulfonylethyl(meth)acrylat,
Thiocyanatomethyl(meth)acrylat,
Methylsulfinylmethyl(meth)acrylat,
Bis((meth)acryloyloxyethyl)sulfid;
mehrwertige (Meth)acrylate, wie
Trimethyloylpropantri(meth)acrylat.
Gemäß einem bevorzugten Aspekt der vorliegenden Erfindung enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1;
verzweigte Alkene, wie beispielsweise Vinylcyclohexan, 3,3-Dimethyl-1-propen, 3-Methyl-1-diisobutylen, 4-Methylpenten-1;
Acrylnitril; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid; und
Diene, wie beispielsweise Divinylbenzol.
Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert-Butylperoxy-3,5,5-trimethylhexanoat, Dicumylperoxid, 1,1-Bis(tert.-butylperoxy)cyclohexan, 1,1 -Bis(tert.-butylperoxy)3,3,5-trimethylcyclohexan, Cumylhydroperoxid, tert.-Butylhydroperoxid, Bis(4-tert.-butylcyclohexyl)peroxydicarbonat, und UV-Initiatoren, wie 1,2-Diphenyl-2,2-dimethoxyethanon, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 10 Gew.-%, vorzugsweise von 0,5 bis 3 Gew.-%, bezogen auf das Gewicht der Monomeren, eingesetzt.

Die zuvor genannten Polymere können einzeln oder als Mischung verwendet werden. Hierbei können auch verschiedene Poly(meth)acrylate oder cycloolefinische Polymere eingesetzt werden, die sich beispielsweise im Molekulargewicht oder in der Monomerzusammensetzung unterscheiden.

Die erfindungsgemäßen Kunststoffplatten können beispielsweise aus Formmassen der zuvor genannten Polymere hergestellt werden. Hierbei werden im allgemeinen thermoplastische Formgebungsverfahren eingesetzt, wie Extrusion oder Spritzguß.

Das Gewichtsmittel des Molekulargewichts M_{w} der erfindungsgemäß als Formmasse zur Herstellung der Kunststoffplatten zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Besonders bevorzugte Formmassen, die Polyacrylate umfassen, sind unter dem Handelsnamen ®PLEXIGLAS von der Fa. Röhm GmbH kommerziell erhältlich. Bevorzugte Formmassen, die cycloolefinische Polymere umfassen, können unter dem Handelsnamen ®Topas von Ticona und ®Zeonex von Nippon Zeon bezogen werden. PolycarbonatFormmassen sind beispielsweise unter dem Handelsnamen ®Makrolon von Bayer oder ®Lexan von General Electric erhältlich.

Des weiteren können die Kunststoffplatten durch Gußkammerverfahren erzeugt werden. Hierbei werden beispielsweise geeignete Acrylharzmischungen in einer Form gegeben und polymerisiert. Derartig hergestellte Platten sind unter der Handelsbszeichnung ®PLEXIGLAS GS von der Fa. Röhm GmbH kommerziell erhältlich

Besonders bevorzugt umfassen die Kunststoffplatten mindestens 80 Gew.-%, insbesondere mindestens 90 Gew.-%, bezogen auf das Gesamtgewicht der Platte, Polyacrylate, Polycarbonate und/oder cycloolefinische Polymere. Besonders bevorzugt bestehen die Kunststoffplatten aus Polymethylmethacrylat, wobei das Polymethylmethacrylat übliche Additive enthalten kann. Derartige Kunststoffplatten aus Polymethylmethacrylat sind unter anderem von Röhm GmbH & Co. KG unter der Handelbezeichnung ®PLEXIGLAS XT kommerziell erhältlich.

Des weiteren können die zur Herstellungen der Kunststoffplatten zu verwendenden Formmassen sowie die Acrylharze übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher. Die Menge an Zusatzstoffen ist jedoch auf den Anwendungszweck beschränkt.

Gemäß einer bevorzugten Ausführungsform können Kunststoffe eine Schlagzähigkeit gemäß DIN 53453 von mindestens 20 mmN/mm², bevorzugt mindestens 30 mmN/mm² aufweisen.

Im allgemeinen weisen die zu laminierenden Kunststoffplatten eine Dicke im Bereich von 1 mm bis 30 mm, vorzugsweise 2 mm bis 25 mm auf, ohne daß hierdurch eine Beschränkung erfolgen soll.

Diese Platten können transparent oder eingefärbt sein. Eine Färbung der Platten kann beispielsweise durch Farbstoffe oder Pigmente erzielt werden.

Die mindestens zwei Kunststoffplatten können eine gleiche oder eine unterschiedliche Dicke aufweisen. Gemäß einer besonderen Ausführungsform der vorliegenden Erfindung ist die dickere Kunststoffplatte transparent und die dünnere Kunststoffplatte mit Pigmenten oder Farbstoffen ausgestattet.

Durch diesen Aufbau werden sehr stabile Platten erhalten, die unter Verwendung von relativ geringen Mengen an Pigmenten oder Farbstoffen eine gleichmäßige Färbung zeigen. Diese Platten können insbesondere zur Lichtwerbung eingesetzt werden und sind als Bicolorplatten bekannt.

Dementsprechend können beliebige Kunststoffplatten gemäß dem Verfahren der vorliegenden Erfindung miteinander kombiniert werden. Beispielsweise können ®PLEXIGLAS XT-Platten mit ®PLEXIGLAS GS-Platten und/oder ®PLEXIGLAS GS-Platten mit ®PLEXIGLAS SZ-Platten und/oder ®PLEXIGLAS LSW-Platten mit ®PLEXIGLAS XT-Platten kombiniert werden, wobei eine farblose mit einer gefärbten Platten oder zwei farblose Platten oder zwei farbige Platten miteinander verbunden werden können.

Zum Verkleben der Platten trägt man auf mindestens eine der zu verklebende Oberflächen einen flüssigen Klebstoff auf. Der zu verwendende Klebstoff wird auf das Kunststoffmaterial der Platten abgestimmt. Die Auswahl ist dem Fachmann bekannt.

Vielfach enthalten derartige Klebstoffe übliche Additive, insbesondere Füllstoffe, Weichmacher, Farbstoffe, Lichtschutzmittel, Aktivatoren und/oder Verdickungsmittel.

PMMA-Platten können beispielsweise mit Klebstoffen laminiert werden, die Acrylatmonomere enthalten. Diese Monomere wurden zuvor beschrieben. Zur Einstellung der Viskosität können diese Klebstoffe gelöste Polyacrylate umfassen.

Derartige Klebstoffe können mit Initiatoren gehärtet werden, die Radikale bilden. Geeignete Initiatoren wurden zuvor beschrieben.

Klebstoffe für Polyacrylate können kommerziell unter der Handelsbezeichnung ®Acrifix und ®Agorit von Röhm GmbH erhalten werden.

Polycarbonat, Polystyrol und Polyesterplatten können unter anderem mit Polyurethan- und/oder Epoxid-Klebstoffen verbunden werden.

Epoxidklebstoffe umfassen insbesondere härtbare Polyepoxidverbindungen sowie Härter. Als Härter dienen beispielsweise Dicarbonsäureanhydride, Dicyanodiamide und aromatische, aliphatische und cycloaliphatische Amine. Je nach verwendetem System können diese Klebstoffe sowohl bei Raumtemperatur oder bei höheren Temperaturen gehärtet werden.

Auch diese Klebstoffe sind bekannt und unter anderem in H. Lee, K. Neville, Handbook of Epoxy Resins, Chap. 21, McGraw Hill Book Comp. (1967) beschrieben.

Diese Klebstoffe können beispielsweise unter der Handelsbezeichnung ®Araldite, ®Metallon und ®Stabilit ultra kommerziell erhalten werden.

Des weiteren können Polyurethanklebstoffe verwendet werden. Derartige Klebstoffe umfassen Verbindungen, die im gehärteten Zustand Urethangruppen umfassen.

Auch diese Klebstoffe sind bekannt und unter anderem in W. M. Ramsay, Epoxy and Urethane Adhesives, Palmerton Publ. Co., New York 1971 beschrieben.

Diese Klebstoffe können beispielsweise unter der Handelsbezeichnung ®Araldite, ®Liofol und ®Macroplast kommerziell erhalten werden.

Die erfindungsgemäß zu verwendenden Klebstoffe sind flüssig, wobei die Fließfähigkeit breit variiert werden kann. Vorzugsweise liegt die Viskosität im Bereich von 100 bis 5000 mPa*s, insbesondere von 500 bis 2500 mPa*s gemessen nach Brookfield bei 20°C. Zur Einstellung der Viskosität können die Klebstoffe Polymere und/oder Lösungsmittel aufweisen. Da ein Lösungsmittel jedoch nur schlecht aus dem Laminat entfernt werden kann, dienen vorzugsweise nur polymerisierbare Verbindungen als Lösungsmittel.

Die Klebstoffe können auf eine oder auf beide Kunststoffplatten aufgetragen werden. Hierzu können unter anderem Rakel oder Walzen verwendet werden. Des weiteren kann der Klebstoff auch durch Düsen aufgebracht werden. Hierfür geeignete Vorrichtungen sind bekannt.

Die Dicke der Klebstoffschicht kann in weiten Bereichen liegen. Im allgemeinen ist die Klebstoffschicht vor dem Verpressen der Platten jedoch 1 µm bis 5000 µm, vorzugsweise 10 µm bis 3000 µm, besonders bevorzugt 100 µm bis 1000 µm dick, ohne daß diese Größe kritisch wäre. Diese Schichtdicke kann beispielsweise dadurch erzielt werden, daß man 1 bis 5000 g/m², insbesondere von 10 bis 3000 g/m², besonders bevorzugt 1000 bis 3000 g/m² Klebstoff aufbringt. Diese Schicht muß nicht absolut eben sein, da die Klebstoffschicht durch das Pressen verteilt wird.

Nach dem Auftragen des Klebstoffs werden die beiden Platten mit zwei Walzen zusammenpreßt. Die Walzen können aus jeden hierfür üblichen Material hergestellt werden. So können zum Verpressen sowohl Walzen aus Metall, insbesondere Edelstahl, oder aus Hartgummi eingesetzt werden. Bevorzugt werden jedoch Walzen aus Hartgummieingesetzt, die vorzugsweise eine Shore-Härte im Bereich von 50-70 (Shore A) aufweisen. Diese Walzen führen zu einer gleichmäßigeren Druckverteilung.

Der Druck, mit dem die Platten zusammengepreßt werden, ist von der Viskosität des Klebstoffs sowie der aufgetragenen Menge abhängig.

Nachdem Zusammenpressen der Platten wird der Klebstoff gehärtet. Die Härtung kann thermisch und/oder photochemisch erfolgen, wobei auch Klebsysteme bekannt sind, die ohne Lichteinstrahlung bei Raumtemperatur härten. Derartige Systeme enthalten üblich neben einem Radikalbildner zusätzlich Reduktionsmittel, wobei diese Systeme jedoch sehr rasch verarbeitet werden müssen.

Die Härtungszeit hängt hierbei vom Klebstoff ab. Im allgemeinen liegt diese Größe im Bereich von einer Sekunde bis 48 Stunden, vorzugsweise einer Minute bis zehn Stunden, ohne daß hierdurch eine Beschränkung erfolgen soll. Im Rahmen der vorliegenden Erfindung bedeutet der Begriff "gehärtet", daß zur Delamination der Kunststoffplatten eine Kraft von mindestens 35 N/mm², vorzugsweise mindestens 50 N/mm² aufgebracht werden muß.

Die Nachteile des Standes der Technik lassen sich überraschend einfach überwinden, indem man über mindestens eine der Walzen eine Schutzfolie führt. Hierdurch kann der durch das Verpressen der Zwischenschicht über die Ränder der Platten laufende Klebstoff zuverlässig aus der Vorrichtung entfernt werden, ohne daß die Walzen mit dem Klebstoff in Berührung kommen. Je nach Dicke der Platten können auch über beide Walzen Schutzfolien geführt werden.

Die Dicke der Schutzfolie ist von vielen Faktoren abhängig. Hierzu gehören unter anderem die Art der Walze und der Schutzfolie sowie der Druck, der zum Verpressen verwendet wird. Im allgemeinen liegt die Dicke der Kunststoffolie im Bereich von 1 bis 1000 µm, vorzugsweise 10 bis 250 µm, ohne daß hierdurch eine Beschränkung erfolgen soll.

Das Material, aus dem die Schutzfolie gefertigt ist, ist unkritisch. Gemäß einem besonderen Aspekt der vorliegenden Erfindung wird die Schutzfolie aus Polyolefinen, beispielsweise Polyethylen, Polypropylen, Polybutylen, Polyvinylchlorid, Ethylen-Tetrafluorethylen-Copolymere und/oder Polytetrafluorethylen (Teflon); Polyestern und/oder Zellglas (Cellulosehydrat) hergestellt.

Auf diesen Folien haften viele Klebstoffe nach der Härtung nur schlecht bzw. gar nicht. Dementsprechend können viele der gehärteten Klebstoffe mühelos von der Folie entfernt werden, so daß diese wiederverwendet werden kann.

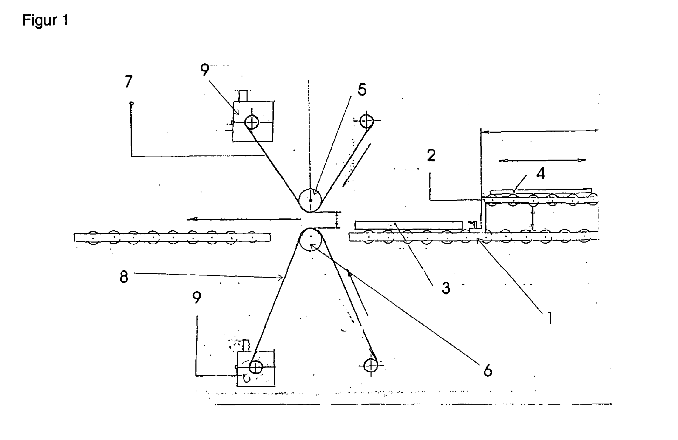

Nachfolgend wird die vorliegende Erfindung unter Verwendung eines in Abbildung 1 schematisch gezeigten Walzenstuhls dargestellt, ohne daß diese Beschreibung die Erfindung begrenzen soll.

Der in Abbildung 1 dargestellte Walzenstuhl umfaßt zwei Rollentische (1) und (2), auf die jeweils eine Kunststoffplatte (3) bzw. (4) abgelegt werden kann.

Zumindest einer der Rollentische (1) oder (2) ist mit Mitteln versehen, mit denen der Rollentisch vertikal und horizontal bewegt werden kann, wobei auch die Neigung des Tisches variiert werden kann. Hierdurch können die Kunststoffplatten (3) und (4) nach dem Auftragen des Klebstoffs übereinander geführt und miteinander blasenfrei verbunden werden, wobei man die Kunststoffplatten (3) und (4) durch die Walzen (5) und (6) verpreßt.

Die Schutzfolien (7) und (8) verhindern zuverlässig, daß überschüssiger Klebstoff auf die Walzen (5) oder (6) gelangt. Überschüssiger Klebstoff kann von der Schutzfolie in eine Auffangwanne (9) überführt werden, die vorzugsweise mit einer Absaugung ausgestattet ist.

Nach dem Verpressen der Platten, kann das Laminat auf einen dritten Rollentisch überführt werden, auf dem der Klebstoff aushärten kann.

Je nach verwendetem Klebstoff/Härter-System können Lampen oder Mittel zum Temperieren vorgesehen werden, die den Klebstoff zwischen den verpreßten Platten härten.

Nach einer besonderen Variante des vorliegenden Verfahrens können ein oder zwei Folien auf der bzw. den Oberflächen der verpreßten Platten geführt werden, bis der Klebstoff gehärtet ist. Hierdurch kann die Plattenoberfläche zusätzlich geschützt werden.

Des weiteren kann auch über den dritten Rollentisch eine Schutzfolie geführt werden. Dies kann vorteilhaft sein, falls eine große Menge eines Klebstoffs mit geringer Viskosität auf die Platten aufgetragen wird.

## Patentansprüche

1. Verfahren zum Verkleben von mindestens zwei Kunststoffplatten, bei dem man auf mindestens eine der zu verklebenden Oberflächen einen flüssigen Klebstoff aufträgt, die beiden Platten mit zwei Walzen zusammenpreßt und anschließend den sich zwischen den Platten befindlichen Klebstoff aushärtet, **dadurch gekennzeichnet, daß** man über mindestens eine der Walzen eine Schutzfolie führt.

2. Verfahren nach Anspruch 1, **dadurch gekennzeichnet, daß** die Schutzfolie aus Polyolefinen, Polyestern und/oder Zellglas ist.

3. Verfahren nach Anspruch 1 oder 2, **dadurch gekennzeichnet, daß** die Walzen aus Hartgummi sind.

4. Verfahren nach einem oder mehreren der vorhergehenden Ansprüche, **dadurch gekennzeichnet, daß** die Kunststoffplatten eine Dicke im Bereich von 1 bis 30 mm aufweisen.

5. Verfahren nach einem oder mehreren der vorhergehenden Ansprüche, **dadurch gekennzeichnet, daß** die Kunststoffplatten eine unterschiedliche Dicke aufweisen.

6. Verfahren nach Anspruch 5, **dadurch gekennzeichnet, daß** die dickere Kunststoffplatte transparent ist.

7. Verfahren nach Anspruch 5 oder 6, **dadurch gekennzeichnet, daß** die dünnere Kunststoffplatte mit Pigmenten oder Farbstoffen ausgestattet ist.

8. Verfahren nach einem oder mehreren der vorhergehenden Ansprüche, **dadurch gekennzeichnet, daß** der flüssige Klebstoff eine Viskosität im Bereich von 500 bis 2500 mPa*s aufweist.

9. Verfahren nach einem oder mehreren der vorhergehenden Ansprüche, **dadurch gekennzeichnet, daß** der flüssige Klebstoff thermisch und/oder durch Bestrahlen gehärtet wird.

10. Verfahren nach einem oder mehreren der vorhergehenden Ansprüche, **dadurch gekennzeichnet, daß** die Kunststoffplatten PMMA, Polycarbonat, COC, Polyester und/oder Polystyrol enthalten.

11. Vorrichtung zur Durchführung des Verfahrens nach einem oder mehreren der Ansprüche 1 bis 10 aufweisen mindestens zwei Walzen zum Pressen von Kunststoffplatten und weiteren Rollen zum Führen der Kunststoffplatten, **dadurch gekennzeichnet, daß** über mindestens eine der Walze eine Schutzfolie geführt wird.
